# EUROPEAN PATENT APPLICATION

(11) **EP 4 831 250 A1**
(43) Date of publication of application: **28.10.2026**
(21) Application number: 26172177.3
(22) Date of filing: 14.04.2026
(51) Int. Cl.: C09D 11/101

(54) **RADIATION-CURABLE INK COMPOSITION, PRINTING METHOD AND PRINTED OBJECT**

(30) Priority: 22.04.2025 EP 25171683
(71) Applicant: Canon Production Printing Holding B.V., 5914 HH Venlo (NL)
(72) Inventor: ZHAN, Yuanyuan, 5914 HH Venlo (NL)
(74) Representative: Canon Production Printing IP Department

(57) **Abstract**

The present invention relates to a radiation-curable component. The present invention further relates to an ink composition comprising a radiation-curable component and to a method for preparing such ink composition. The present invention also relates to an ink set. The present invention further relates to a method of printing and to a printed object. In addition, the present invention relates to a method for recycling a printed object.

## Description

The present invention relates to a radiation-curable component. The present invention further relates to an ink composition comprising a radiation-curable component and to a method for preparing such ink composition. The present invention also relates to an ink set. The present invention further relates to a method of printing and to a printed object. In addition, the present invention relates to a method for recycling a printed object.

### Background of the invention

Radiation-curable inkjet ink compositions are known in the art. These ink compositions comprise one or more radiation-curable components. The radiation-curable may be applied onto a recording medium to form an image. The ink applied onto the recording medium may be cured, for example using a suitable type of radiation, such as UV radiation, to form a robust image.

When curing the ink, a polymerization reaction may occur within the ink, thereby transforming the radiation-curable ink in a polymeric layer attached to the recording medium. The recording medium may be made of a polymeric material.

A disadvantage of these prints is that they are difficult to re-use or recycle, or cannot be re-used or recycled at all. Prints are therefore typically landfilled or incinerated at the end of their life, which increases global greenhouse gas emission. In order to reduce the impact of prints on the environment, there is a need for prints that can be recycled or biodegraded.

It is therefore an object of the present invention to provide a radiation-curable component for use in a radiation-curable ink composition that is biodegradable.

It is a further object of the invention to provide a radiation-curable ink composition that is at least partially biodegradable.

### Summary of the invention

The object of the invention is achieved in a radiation-curable ink composition, the radiation-curable ink composition comprising at least one radiation-curable component, the radiation-curable component being a diacrylate component comprising a [-(CH₂)₅C(O)O-] structural element.

Diacrylate components are components capable of undergoing a polymerization reaction upon irradiation with UV radiation.

The [-(CH₂)₅C(O)O-] structural element, present in the radiation-curable components according to the present invention, is derived from caprolactone. Caprolactone, as well as oligomers and polymers thereof, are biologically degradable.

Because of the presence of a biodegradable structural element, the radiation-curable components according to the present invention are biodegradable. Also when cured, polymeric compositions formed by polymerizing the radiation-curable components according to the present invention, are biodegradable.

In an embodiment, the radiation-curable component is a component according to any of the formulas 1 or 2:

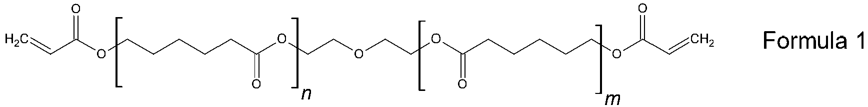

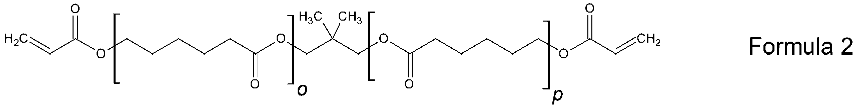

Formulas 1 and 2 represent difunctional acylates.

Formula 1 is a diacrylate, wherein the molecule comprises a number of different structural units. The structural units adjacent to the acrylate functional group are derived from caprolactone. The first structural units comprises n structural units, n may be in the range of from 1 to 40, preferably from 1 to 30, such as from 2 to 20. The third structural units comprises m structural units, m may be in the range of from 1 to 40, preferably from 1 to 30, such as from 2 to 20. In between the caprolactone units, which may be mono caprolactone units, dicaprolactone units, tricaprolactone units, oligocaprolactone units or polylcaporlactone units, a spacer is present. The spacer is a -CH₂CH₂OCH₂CH₂-spacer.

Formula 2 is a diacrylate, wherein the molecule comprises a number of different structural units. The structural units adjacent to the acrylate functional group are derived from caprolactone. The first structural units comprises o structural units, o may be in the range of from 1 to 40, preferably from 1 to 30, such as from 2 to 20. The third structural units comprises p structural units, p may be in the range of from 1 to 40, preferably from 1 to 30, such as from 2 to 20. In between the caprolactone units, which may be mono caprolactone units, dicaprolactone units, tricaprolactone units, oligocaprolactone units or polylcaporlactone units, a spacer is present. The spacer is a -CH₂C(CH₃)₂)CH₂- spacer.

The components according to any of the formulas 1 and 2 comprise acrylate functional groups. Because of the presence of acrylate functional groups, the components can be used as radiation-curable component in a radiation-curable composition, such as a radiation-curable inkjet ink.

In a further aspect of the invention, a radiation-curable ink composition is provided, the radiation-curable ink composition comprising at least one of the radiation-curable components according to the present invention.

The radiation-curable ink composition may comprise a radiation-curable component according to the present invention. Optionally, the radiation-curable ink composition may comprise a mixture of several different radiation-curable components according to the present invention.

Optionally, the radiation-curable ink composition may comprise addition radiation-curable components. The additional radiation-curable ink components may be radiation-curable monomers or oligomers. Optionally, the ink composition may comprise one or more radiation-curable monomers and/or one or more radiation-curable oligomers. The monomers and/or oligomers may undergo a polymerization reaction upon radiation with a suitable type of radiation, such as UV radiation. The monomers and oligomers may be monofunctional (i.e. one polymerizable group per molecule), difunctional (i.e. two polymerizable groups per molecule), trifunctional (i.e. three polymerizable groups per molecule), tetrafunctional (i.e. four polymerizable groups per molecule), or multifunctional (i.e. five or more polymerizable groups per molecule).

Examples of radiation-curable monomers are (meth)acrylates, epoxides, vinyls, vinylethers, vinyl esters, vinyletheracrylates, allyl ethers, allyl esters, acrylamides, methacrylamides, styrenes, maleates, fumarates and itaconates.

Examples of radiation-curable oligomers include urethane acrylate oligomers, polyester oligomers, amine functionalized oligomers, polyether oligomers, polyamide oligomers, acrylate oligomers and epoxy based materials such as bisphenol A epoxy acrylates and epoxy acrylates.

The radiation-curable medium may further comprise at least one inhibitor. An inhibitor is a component that prevent (inhibits) unwanted polymerization of the radiation-curable compound. Inhibitors may be added to the radiation curable inkjet ink composition to increase the shelf life of the ink composition.

The radiation-curable medium may further comprise a solvent, such as water or an organic solvent. The solvent may be added to the radiation curable medium to tune ink properties, such as viscosity.

Further, additional components may be added to the radiation curable medium. For example, the radiation curable medium may comprise surfactants, antibacterial components and anti-fungi components.

The radiation curable inkjet ink composition may further comprise a colorant, such as a pigment, a dye or a mixture thereof. Further, the radiation curable inkjet ink composition may comprise a mixture of dyes and/or a mixture of pigments. The colorant may provide the ink composition with a predetermined color. The colorant may be a cyan, magenta, black, yellow, brown orange, green, blue, red, purple or white colorant.

In an embodiment, the radiation-curable ink composition further comprising one or more photo initiators. A photo initiator is a component that improves the efficiency of curing; i.e. increases the polymerization rate when the ink composition is irradiated with suitable radiation, such as UV radiation.

Photoinitiators can be divided in Norrish type I and Norrish type II photoinitiators. Each of these types of photoinitiators comprises of several classes of photoinitiators. Examples of classes of photoinitiators that are Norrish type I photoinitiators include benzil ketals, benzoin ethers, acylphosphine oxides, α,α- dialkoxyacetophenones, α-hydroxyalkylphenones, α-aminoalkylphenones, acylphosphine oxides, acylphosphine sulphides, α-haloketones, α-halosulfones, phenylglyoxalates, peroxy compounds, O-acyl α-oximinoketons, acylphosphonates,thiobenzoic S esters, azo compounds, Triazines and biimidazoles. Examples of classes of photoinititaors that are Norrish type II photoinititiators include xanthones, thioxanthones, benzophenones, 1,2-diketones, α-ketocoumarins, phenylglyoxylates and anthraquinones.

Optionally, radiation-curable matrix may comprise a combination of non-polymeric, polymeric and/or polymerizable photo initiators. The one or more photo initiators may be present in an amount of from 0.2 wt% to 15 wt%, based on the total weight of the ink composition. Preferably, the one or more photo initiators may be present in an amount of from 2.0 wt% to 12 wt%, based on the total weight of the ink composition, such as from 5.0 wt% to 10 wt%, based on the total weight of the ink composition.

In an embodiment, the radiation-curable ink composition further comprising a gellant. The radiation-curable gelling ink composition may comprise one or more gellants. A gellant is also referred to as a gelling aid, gelator, gelling agent or thickener.

The presence of one or more gellants can cause a viscosity increase in the inkjet ink composition upon cooling of the ink composition. The viscosity increase in the ink composition should be sufficient, to adequately control droplet spreading.

Examples of gellants used in gelling radiation curable inkjet ink compositions are waxes, such as paraffin wax, microcrystalline wax, polyethylene waxes, polypropylene waxes, curable waxes and natural waxes, such as animal-based waxes or plant-based waxes, fatty acids, fatty alcohols, ketones, fatty acid esters, such as fatty acids of pentaerythritol and/or fatty acid esters of dipentaerythritol; and fatty acid amides. Because gelling inks have reduced spread of ink on the recording medium, due to their gelling property, it may not be necessary to cure the ink droplets immediately after applying them onto the recording medium. It is possible to keep the droplets in an uncured state on the recording medium, without color bleeding occurring. The gellant may be present in an amount of from 0.1 wt% to 15 wt% based on the total weight of the ink composition, preferably from 0.2 wt% to 10 wt% based on the total weight of the ink composition, more preferably from 0.3 wt% to 5 wt% based on the total weight of the ink composition.

In an aspect of the invention, an ink set is provided, the ink set comprising at least two inks, wherein at least one of the at least two inks is a radiation-curable ink composition in accordance with the present invention.

An ink set may comprise a plurality of different inks. For example, the ink set may be a CMYK ink set, comprising a Yellow, a Magenta, a Cyan and a blacK ink composition. The ink set may further comprise additional colors, such as white, red, green, light magenta, light cyan and/or grey. Further, the ink set may comprise one or more metallic ink compositions. Optionally, the ink set may comprise an undercoat and/or an overcoat composition. The undercoat and/or overcoat composition may be colorless ink compositions.

At least one ink of the ink set may comprise a radiation-curable component according to the present invention. Preferably, two or more of the inks in the ink set may comprise a radiation-curable component according to the present invention. More preferably, all inks in the ink set may comprise a radiation-curable component according to the present invention.

An ink set, wherein one or more radiation-curable ink composition comprise a radiation-curable component according to the present invention, may provide prints that are biodegradable.

In an aspect of the invention, a method for preparing a radiation-curable ink composition is provided, the method comprising the steps of:
a. Providing a radiation-curable component according to the present invention;
b. Providing at least one additional component, the at least one additional components being selected from one or more radiation-curable components, one or more solvents, on or more inhibitors, on or more photo-initiators, one or more colorants and/or one or more gellants;
c. Mixing the radiation-curable component according to the present invention and the at least one additional component.

The method may result in the preparation of the radiation-curable ink composition in accordance with the present invention.

In a further aspect of the invention, a method for preparing a printed object is provided, the method comprising the steps of:
a. jetting droplets of a radiation-curable ink composition according to the present invention onto the recording medium;
b. curing the radiation-curable ink composition by irradiating the ink composition using UV radiation.

In the method, an image is applied onto a recording medium. In the method, in step a), an image is applied to the recording medium. The image may be applied using an ink composition according to the present invention. The ink composition may be applied onto the recording medium in a predetermined fashion, e.g. in accordance with image files stored on suitable storing means. The image may be applied for example by jetting droplets of the radiation-curable ink composition using an inkjet print head.

The recording medium may be in an absorbing medium or non-absorbing medium. In the method, in step b), the radiation-curable gelling ink composition is cured by irradiating the ink composition using UV radiation. The inkjet ink composition may be irradiated using a suitable source of radiation, such as a halogen lamp, a mercury lamp and/or a LED lamp. Optionally, a plurality of sources of radiation may be used to irradiate the inkjet ink composition.

In an embodiment, the recording medium is made from a sustainable material. More preferably, the recording medium is biodegradable. When preparing a printed object using the ink according to the present invention and a biodegradable recording medium, the printed object may be biodegradable in its entirety.

In a further aspect of the invention, a printed object is provided, the printed object being obtainable by a method in accordance with the present invention. The printed object is obtainable by the above described method for preparing a printed object.

In a further aspect of the invention, a method for recycling a printed object, the method comprising the step of:
- Decomposing the cured ink layer.

The cured ink layer may be decomposed. Decomposing the cured ink layer may be done chemically and/or biologically. Examples of chemical decomposition include treatment with an acidic and/or basic liquid, optionally at elevated temperature. Examples of biological decomposition include treatment with micro-organism, such as bacteria or fungi.

In an embodiment, the printed object may be decomposable in its entirety. For example, in case the recording medium is decomposable, such as biologically degradable and/or chemically degradable, the printed object may be decomposed without separating the cured ink layer form the recording medium.

In an embodiment, the method for recycling a printed object further comprises the step: of:
- Separating the cured ink layer from the recording medium.

The cured ink layer may be separated from the recording medium before the ink layer is decomposed. Separation of the ink layer form the recording medium may be done mechanically and/or chemically. Examples of mechanical removal of the cured ink layer includes for example tearing and scraping. Examples of chemical removal include treatment with an acidic and/or basic liquid, optionally at elevated temperature.

### Brief description of the drawings

These and further features and advantages of the present invention are explained hereinafter with reference to the accompanying drawings showing non-limiting embodiments and wherein:
Fig. 1 is a schematic perspective view of a first example of a printing system according to the present invention in a first printing mode;
Fig. 2 is a schematic perspective view of a second example of a printing system according to the present invention in a second printing mode;
Fig. 3 is a schematic diagram of a control unit of a reprographic system according to Fig. 1 or 2.

In the drawings, same reference numerals refer to same elements.

### Detailed description of the drawings

The present invention will now be described with reference to the accompanying drawings, wherein the same reference numerals have been used to identify the same or similar elements throughout the several views.

### Printing system

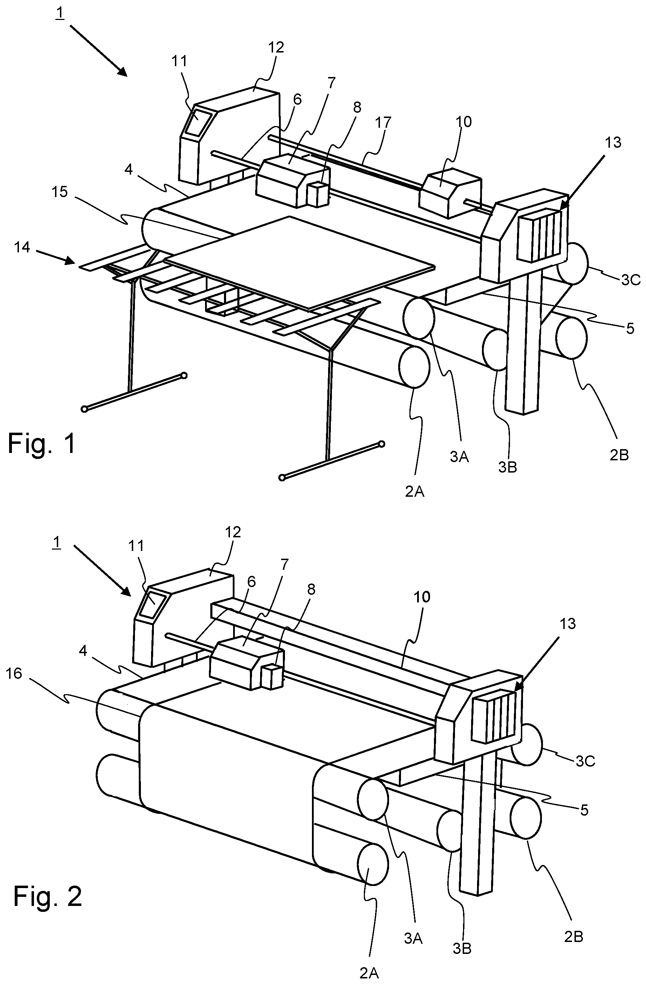

Fig. 1 shows a printing apparatus. A printing apparatus is also known as printer. The printing apparatus 1 comprises a scanning printing unit 7 for printing on a recording medium 15. The recording medium 15 in Fig. 1 is a relatively rigid substrate, such as a panel. The recording medium 15 is supplied from a media input unit 14, which may be configured for storing a plurality of such print media 15 and supplying these to the printer 1. The printer 1 comprises a medium support 4. Printer 1 may further comprise transport means for receiving and transporting the recording medium 15 along the scanning printing unit 7. In Fig. 1, the medium support is embodied as an endless belt 4. The endless belt is an endless transport belt 4 supported on a plurality of support rollers 3A, 3B, 3C. At least one of the support rollers 3A, 3B, 3C is provided with driving means for moving the belt 4. The belt 4 is therefore configured to support and transport the recording medium. Additionally, one or more one of the support rollers 3A, 3B, 3C may be configured to be moved and/or tilted to adjust and control the lateral position of the belt 4. The scanning printing unit 7may be provided with a sensor 8, such as a CCD camera, to determine the relative position of belt 4 and/or the recording medium 15. Data from said sensor 8 may be applied to control the position of the belt 4 and/or the recording medium 15. The belt 4 is further provided with through-holes and a suction box 5 in connection with a suction source (not shown), such that an underpressure may be applied to the recording medium 15 via the through-holes in the belt 4. The underpressure adheres the recording medium 15 flatly to the belt 4 and prevents displacement of the recording medium 15 with respect to the belt 4. Due to this holding the belt 4 is able to transport the recording medium 15. It will be appreciated that other suitable transport means, such as rollers, steppers, etc, may alternatively be applied. The recording medium 15 may be transported stepwise and/or in continuous movement. The scanning printing unit 7 is configured to translate along a first guide beam 6 in a scanning direction. The scanning direction is perpendicular to the direction in which the print medium is transported by the belt 4. The scanning printing unit 7 holds a plurality of print heads (not shown), which are configured to jet a plurality of different marking materials (different colors of ink, primers, coatings, etc.) on the recording medium 15. Each marking material for use in the scanning printing unit 7 is stored in one of a plurality of containers arranged in fluid connection with the respective print heads for supplying marking material to said print heads to print an image on the recording medium 15.

The application of the marking material, such as the radiation-curable ink from the printing units is performed in accordance with data provided in the respective print job. The printing unit may comprise one or more inkjet print heads. The timing by which the droplets of marking material are released from the one or more print heads determines their position on the recording medium 15. The timing may be adjusted based on the position of the scanning printing unit 7 along the first guide beam 6. The above mentioned sensor 8 may therein be applied to determine the relative position and/or velocity of the scanning printing unit 7 with respect to the recording medium 15. Based upon data from the sensor 8, the release timing of the marking material may be adjusted.

Upon ejection of the marking material, some marking material may be spilled and stay on a nozzle surface of the print heads. The marking material present on the nozzle surface, may negatively influence the ejection of droplets and the placement of these droplets on the recording medium 15. Therefore, it may be advantageous to remove excess of marking material from the nozzle surface. The excess of marking material may be removed for example by wiping with a wiper and/or by application of a suitable anti-wetting property of the surface, e.g. provided by a coating.

The marking materials may require treatment to properly fixate them on the print medium. Thereto, a fixation unit is provided downstream of the scanning printing unit 7. The fixation unit may emit radiation to facilitate the marking material fixation process. In the example of Fig. 1, the fixation unit is page-wide curing array 10. The page-wide curing array 10 extends in the main scanning direction. The page-wide curing array does not move in operation in the main scanning direction. The page-wide array may move in the direction of medium transport, which is a direction perpendicular to the scanning direction.

The page-wide curing array 10 is configured to in operation emit radiation of certain frequencies, which interacts with the marking materials, for example UV light in case of UV-curable inks. Optionally (not shown), the scanning printing unit 7 may be provided with a further fixation unit on the same carriage which holds the print heads. This further fixation unit can be used to (partially) cure and/or harden the marking materials, independent of or interaction with the page-wide curing array 10.

After printing and fixation, the recording medium 15 is transported to a receiving unit (not shown). The receiving unit may comprise a take-up roller for winding up the recording medium 15, a receiving tray for supporting sheets of recording medium 15, or a rigid media handler, similar to the media input unit 14. Optionally, the receiving unit may comprise processing means for processing the medium after printing, e.g. a posttreatment device such as a coater, a folder, a cutter, or a puncher.

Printing apparatus 1 furthermore comprises a user interface 11 for receiving print jobs and optionally for manipulating print jobs. The local user interface unit 11 is integrated to the print engine and may comprise a display unit and a control panel. Alternatively, the control panel may be integrated in the display unit, for example in the form of a touch-screen control panel. The local user interface unit 11 is connected to a control unit 12 connected to the printer 1. The control unit 12, for example a computer, comprises a processor adapted to issue commands to the printer 1, for example for controlling the print process. The printer 1 may optionally be connected to a network. The connection to the network can be via cable or wireless. The printer 1 may receive printing jobs via the network. Further, optionally, the control unit 12 of the printer 1 may be provided with an input port, such as a USB port, so printing jobs may be sent to the printer 1 via this input port.

### Hybrid printing system

The printer 1 in Fig. 1 is a so-called hybrid printer, capable of handling both flexible media and rigid substrates. In Fig. 1, the printer 1 operates in a first print mode, wherein the printer 1 is configured for transporting rigid substrates, such as the recording medium 15. Such rigid print media 15 may be panels, for example panels for doors or walls, corrugated media, plates formed of plastic or metal, etc. To handle these rigid print media 15, the printer 1 in Fig. 1 is configured with a substantially linear transport path: from the media input device 14, the recording medium 15 moves forward along the scanning printing unit 7 at a substantially constant height. The media input unit 14 and the receiving unit are positioned at the level of the medium support surface of the belt 4. In Fig. 2, a flexible web medium 16 is supplied to the printer 1, which web medium 16 may be composed of e.g. paper, label stock, coated paper, plastic or textile. The web medium 16 is supplied from the input roller 2A and extends across the belt 4 to the take-up roller 2B, where the web medium 16 is re-wound. The printer 1 is configured to swiftly and efficiently switch between print modes.

### Control

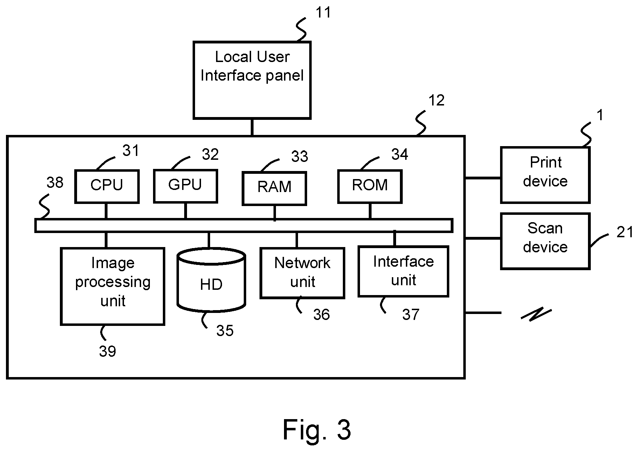

An embodiment of the control unit 12 is in more detail presented in Fig. 3. As shown in Fig. 3, the control unit 12 comprises a Central Processing Unit (CPU) 31, a Graphical Processor Unit (GPU) 32, a Random Access Memory (RAM) 33, a Read Only Memory (ROM) 34, a network unit 36, an interface unit 37, a hard disk (HD) 35 and an image processing unit 39 such as a Raster Image Processor (RIP). The aforementioned units 31 - 37 are interconnected through a bus system 38. However, the control unit 12 may also be a distributed control unit.

The CPU 31 controls the printing system 1 in accordance with control programs stored in the ROM 34 or on the HD 35 and the local user interface panel 11. The CPU 31 also controls the image processing unit 39 and the GPU 32. The ROM 34 stores programs and data such as boot program, set-up program, various set-up data or the like, which are to be read out and executed by the CPU 31. The hard disk 35 is an example of a non-volatile storage unit for storing and saving programs and data which make the CPU 31 execute a print process to be described later. The hard disk 35 also comprises an area for saving the data of externally submitted print jobs. The programs and data on the HD 35 are read out onto the RAM 33 by the CPU 31 as needed. The RAM 33 has an area for temporarily storing the programs and data read out from the ROM 34 and HD 35 by the CPU 31, and a work area which is used by the CPU 31 to execute various processes. The interface unit 37 connects the control unit 12 to the client devices, such as scan device 21 and to the printing system 1. The network unit 36 connects the control unit 12 to the network N and is designed to provide communication with the workstations (not shown) and with other devices 21 reachable via the network N. The image processing unit 39 may be implemented as a software component running on an operation system of the control unit 12 or as a firmware program, for example embodied in a field-programmable gate array (FPGA) or an application-specific integrated circuit (ASIC). The image processing unit 39 has functions for reading, interpreting and rasterizing the print job data. Said print job data contains image data to be printed (i.e. fonts and graphics that describe the content of the document to be printed, described in a Page Description Language or the like), image processing attributes and print settings.

### Experiments and examples

### Materials & Methods

All reagents, chemicals, materials and solvents were obtained from commercial sources and were used as received. All solvents were of AR quality. All reactions were performed under an atmosphere of argon. PCL205-diol and PCL210-diol were obtained from Shenzhen Esun Industrial Co.,Ltd).

### Experiment 1: Synthesis of Component 1-1

PCL205-diol (52.04 g, 0.104 mol, 1 eq.) was dissolved in dichloromethane (DCM) (100 mL) and N,N-dimethylaniline (37.81 g, 0.312 mol, 3 eq.) was added. At 0°C, a solution of acryloyl chloride (23.53 g, 0.260 mol, 2.5 eq.) in DCM (30 mL) was added dropwise. After addition, the amber-colored solution was stirred at 20°C for 18 h, and subsequently washed with 1 M HCl (100 mL) and brine (50 mL). The solution was concentrated, and diethyl ether (150 mL) was added. The mixture was filtered, and the filtrate was washed with brine (50 mL). The organic layer was dried over MgSO₄ and filtered. MEHQ (6.46 g, 0.052 mol, 0.5 eq.) was added, and the solution was evaporated to dryness, and dried in vacuo to give the product as a yellow, viscous liquid in a yield of 58.47 g (92%).

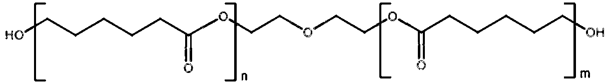

### Molecular structure 1: Structural formula of PCL205-diol, n+m = 5.25

Component 1-1 is a component according to Formula 1.

### Experiment 2: Synthesis of Component 2-1

PCL210-diol (50 g, 0.050 mol, 1 eq.) was dissolved in DCM (100 mL) and N,N-dimethylaniline (18.18 g, 0.150 mol, 3 eq.) was added. At 0°C, a solution of acryloyl chloride (11.31 g, 0.125 mol, 2.5 eq.) in DCM (30 mL) was added dropwise. After addition, the amber-coloured solution was stirred at 20°C for 18 h, and subsequently washed with 1 M HCl (100 mL), 1 M NaOH (25 mL) and brine (50 mL). The solution was concentrated, and diethyl ether (150 mL) was added. The mixture was filtered, and the filtrate was washed with brine (50 mL). The organic layer was dried over MgSO₄ and filtered. MEHQ (3.10 g, 0.025 mol, 0.5 eq.) was added, and the solution was evaporated to dryness, and dried in vacuo to give the product as a yellow, viscous liquid in a yield of 21.58 g (39%).

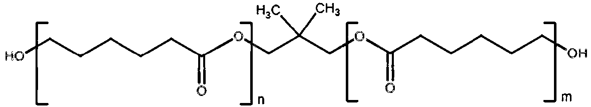

### Molecular structure 2: Structural formula of PCL210-diol, n+m = 7.71

Component 2-1 is a component according to Formula 2.

### Film preparation:

A polymer film was prepared using a radiation-curable composition comprising acrylate (99 wt%) and BAPO (1 wt%). The film was cured using UV radiation. After curing, the cured film was washed with isopropanol to remove any remaining BAPO and dried. The polymeric films had a thickness of less than 1 mm.

### Biodegradability test:

The polymeric films, prepared in the film preparation experiments, were grinded, wherein the size of the grinded particles was controlled to be within 2 mm in x-y plane The grinded film particles were put in compost at a temperature of 58 °C for 6 months. The biodegradability was analyzed by analysis the amount of carbon dioxide released.

### Example 3: Ink preparation

An ink composition was prepared by mixing 49.5 g of component 1-1 and 0.5 g of TPO. The resulting ink composition is referred to as Ink 1.

An ink composition was prepared by mixing 49.5 g of component 2-1 and 0.5 g of TPO. The resulting ink composition is referred to as Ink 2.

### Examples 4A and 4B: film formation

A first polymeric film was prepared using component 1-1, i.e. the diacrylate derivative synthesized in experiment 1. This resulted in polymeric film 4A.

A second polymeric film was prepared using the component 2-1, i.e. the diacrylate derivative synthesized in experiment 2. This resulted in polymeric film 4B.

### Examples 5A and 5B:

The polymeric films prepared in examples 4A and 4B underwent a biodegradability test. The film according to experiment 4A was tested in biodegradability test 5A; the film according to experiment 4B was tested in biodegradability test 5B.

Further, the biodegradability of a reference substance was tested in biodegradability test 5C. The reference substance is micronized cellulose for chromatography.

**Table 1: Results of biodegradability tests 5A and 5C**

| Biodegradability test | Absolute Biodegradability (%) | Relative Biodegradability (%) |
|---|---|---|
| 5A | 188 | 100 |
| 5C | 95.6 | 50.8 |

The above test result clearly show that a film made with component 1-1, which is a composition according to the present invention, is biodegradable.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination and any combination of such claims are herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. A radiation-curable ink composition, the radiation-curable ink composition comprising at least one radiation-curable component, the radiation-curable component being a diacrylate component comprising a [-(CH₂)₅C(O)O-] structural element.

2. Radiation-curable ink composition according to claim 1, wherein the diacrylate component is a component according to any of the formulas 1 or 2: 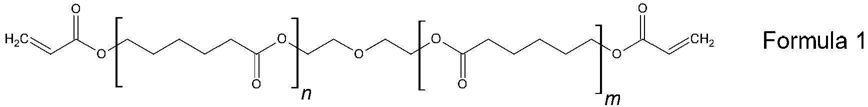 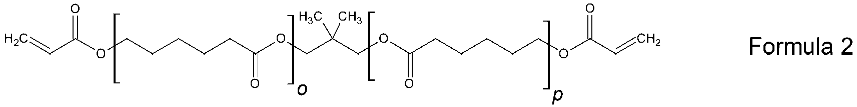 wherein n, m, o, and p are individually selectable and in the range of from 1-30.

3. The radiation-curable ink composition according to claim 1 or 2, the radiation-curable ink composition further comprising one or more photo initiators.

4. The radiation-curable ink composition according to any of the preceding claims, the radiation-curable ink composition further comprising a gellant.

5. An ink set, the ink set comprising at least two inks, wherein at least one of the at least two inks is a radiation-curable ink composition according to any of the claims 1 to 4.

6. A method for preparing a radiation-curable ink composition, the method comprising the steps of:
a) Providing a radiation-curable component, the radiation-curable component being a diacrylate component comprising a [-(CH₂)₅C(O)O-] structural element;
b) Providing at least one additional component, the at least one additional components being selected from one or more radiation-curable components, one or more solvents, on or more inhibitors, on or more photo-initiators, one or more colorants and/or one or more gellants;
c) Mixing the radiation-curable component and the at least one additional component.

7. A method for preparing a printed object, the method comprising the steps of:
a) jetting droplets of a radiation-curable ink composition according to claim 1 onto the recording medium;
b) curing the radiation-curable ink composition by irradiating the ink composition using UV radiation.

8. A printed object, the printed object being obtainable by a method according to claim 7.

9. A method for recycling a printed object, the method comprising the step of:
• Decomposing the cured ink layer.

10. The method according to claim 9, wherein the method further comprises the step of:
• Separating the cured ink layer form the recording medium.
